# EUROPÄISCHE PATENTANMELDUNG

(11) **EP 2 878 845 A1**
(43) Veröffentlichungstag der Anmeldung: **03.06.2015**
(21) Anmeldenummer: 14195762.1
(22) Anmeldetag: 02.12.2014
(51) Int. Cl.: F16D 65/092

(54) **Leichtbaurückenplatte**

(30) Priorität: 02.12.2013 DE 202013010700 U
(71) Anmelder: ABC Advanced Brake Components, 99817 Eisenach/Neukirchen (DE)
(72) Erfinder: Goldbach, Dieter, 61350 Bad Homburg (DE); Kruk, Hans-Jürgen, 47249 Duisburg (DE); Schauer, Danny, 99817 Eisenach (DE)
(74) Vertreter: Dr. Weiss & Arat

(57) **Zusammenfassung**

Ein Bremskörper mit einer Leichtbaurückenplatte (1.1), insbesondere für einen Einbau in Scheibenbremsen an Fahrzeugen oder Industriebremsen, wobei die Leichtbaurückenplatte (1.1) ein Trägerelement für einen Reibbelag (2.1) ist und der Reibbelag (2.1) auf einer Reibbelagsträgerseite (4.1) an der Leichtbaurückenplatte (1.1) angebracht ist, soll dadurch gekennzeichnet sein, dass die Leichtbaurückenplatte (1.1) aus einem hochfesten und gewichtsoptimierten Material besteht.

## Beschreibung

### Technisches Gebiet

Die Erfindung betrifft eine Leichtbaurückenplatte nach dem Oberbegriff des Anspruchs 1 und einen Leichtbau-Verbundbremskörper nach dem Oberbegriff des Anspruchs 8.

### Stand der Technik

Bremsanlagen an Kraftfahrzeugen, motorgetriebenen Fahrzeugen, Anhängern und Industriebremsen weisen häufig Zuspanneinrichtungen in Form einer Scheibenbremse auf. Die Scheibenbremse umfasst dabei typischerweise eine auf der Nabe eines Rades mitlaufende Bremsscheibe. Die Bremsscheibe wird typischerweise von einem Bremssattel umgriffen. In dem Bremssattel sind beidseitig der Bremsscheibe Bremskörper angeordnet. Die Bremskörper werden zum Abbremsen des Rades typischerweise mittels Kolben gegen die Bremsscheibe gepresst.

Der Aufbau des Bremskörpers umfasst in einem Ausführungsbeispiel ein Reibbelag/eine Reibmasse, eine Zwischenschicht (Underlayer) eine Klebeschicht, eine Geräuschdämpfungseinrichtung und eine Rückenplatte. Meist kommen dabei Stahl- oder Graugussrückenplatten zum Einsatz.

Bei Scheibenbremsen, die beispielsweise im PKW und im Transporterbereich eingesetzt werden, werden üblicherweise Bremskörper genutzt, bei denen der Reibbelag auf einer gestanzten ebenen Stahlrückenplatte aufgepresst wird. Zur Erhöhung der Verbundsteifigkeit des Reibbelags mit der Stahlrückenplatte kann die Stahlrückenplatte Bolzen aufweissen, die zu einer höheren Festigkeit zwischen der Stahlrückenplatte und dem Reibbelag führen. Insbesondere können hierdurch die hohen Querkräfte die bei einem Bremsvorgang entstehen besser vom Reibbelag auf die Stahlrückenplatte übertragen werden.

Bei Scheibenbremsen, die für den Einsatz im schweren Nutzfahrzeugbereich vorgesehen sind, kommen häufig Bremskörper zum Einsatz, bei denen der Reibbelag auf einer Graugussrückenplatte aufgepresst wird. Typischerweise handelt es sich bei dem Grauguss um einen handelsüblichen Grauguss (zum Beispiel GG 18, GG 25).

Nachteilig an diesen Rückenplatten ist, dass diese für den PKW-Bereich und insbesondere für den LKW-Bereich bauart- und werkstoffbedingt sehr schwer sind. Weiterhin zeigen die angewandten gewalzten Stähle schall- und schwingungstechnische Eigenschaften, die nur zu geringen Dämpfungseigenschaften führen. Weiterhin muss der gesamte Bremskörper entsorgt werden, sobald der Reibbelag abgenutzt ist.

Einen Ansatz, nicht den gesamten Bremskörper austauschen zu müssen, ist in der DE 10 2007 002 864 A1, die einen mehrteilig aufgebauten Bremskörper zeigt, dargestellt. In dieser besteht der Bremskörper aus einem Bremsbelagsträger, auf dem der Bremsbelag unlösbar aufgebracht ist und einem Basisträger, mit dem der Bremsbelagsträger wiederlösbar verbunden ist. Dieser Verbund bildet einen Bremskörper, bei dem im Falle eines abgenutzten Reibbelags nicht der gesamte Bremskörper ausgetauscht werden muss.

### Aufgabe der Erfindung

Aufgabe der Erfindung ist es, ein Bremskörper zur Verfügung zu stellen, dessen Gewicht im Vergleich zu Bremskörpern aus dem Stand der Technik reduziert ist. Weiterhin ist es Aufgabe der Erfindung, die Geräuschdämpfungseigenschaften des Bremskörpers zu verbessern. Auch ist es Aufgabe der Erfindung, den Materialaufwand in Form der Teilevielfalt zu verringern. Zudem ist es Aufgabe der Erfindung, die Geräuschdämpfung zumindest teilweise in die Rückenplatte des Bremskörpers zu integrieren.

### Lösung der Aufgabe

Zur Lösung der Aufgabe führen die Merkmale nach dem Anspruch 1 und dem Anspruch 8.

Ein erfindungsgemässer Bremskörper ist in einem typischen Ausführungsbeispiel für den Einsatz in einer Zuspanneinrichtung, insbesondere in einer Scheibenbremse an Kraftfahrzeugen, motorgetriebenen Fahrzeugen, Anhängern und Industriebremsen vorgesehen. Der Bremskörper umfasst eine Leichtbaurückenplatte. Die Leichtbaurückenplatte ist ein Trägerelement für einen Reibbelag, der auf einer Reibbelagsträgerseite an der Leichtbaurückenplatte angebracht ist. Der Reibbelag wird in einem Ausführungsbeispiel auf die Leichtbaurückenplatte aufgepresst und/oder aufgeklebt. Bei einer geklebten Verbindung ist zwischen dem Reibbelag und der Leichtbaurückenplatte eine Klebeschicht angeordnet.

In einem typischen Ausführungsbeispiel besteht die Leichtbaurückenplatte aus einem hochfesten und gewichtsoptimierten Material. Vorzugsweise handelt es sich bei dem hochfesten und gewichtsoptimierten Material um ein Gussmaterial, insbesondere eine spezielle Graugusslegierung. In weiteren Ausführungsbeispielen wird die Leichtbaurückenplatte aus Titan oder einem hochfesten Hochtemperaturkunststoff oder einer hochfesten Aluminiumlegierung gefertigt.

Durch den Einsatz eines speziellen Graugusses/Leichtbau-Graugusses kann insbesondere im schweren Nutzfahrzeugbereich eine hohe Gewichtsersparnis/Gewichtsreduktion bei der Rückenplatte des Bremskörpers erreicht werden. Weiterhin kann durch die Leichtbaurückenplatten und das damit eingesparte Gewicht der Energieverbrauch des Fahrzeugs gesenkt werden, da ein höheres Gewicht immer mit einem Mehrverbrauch verbunden ist. Zudem kann durch die Leichtbaurückenplatten und deren Leichtbaukonstruktion das Fahrverhalten optimiert werden, da durch schwerere Bauteile an den Fahrzeugachsen das Fahrverhalten negativ beeinflusst wird.

Durch eine erfindungsgemässe Leichtbaurückenplatte kann beispielsweise im schweren Nutzfahrzeugbereich im Vergleich zu den bestehenden Rückenplatten aus Stahl aus dem Stand der Technik eine Gewichtsersparnis von bis zu 30 % erreicht werden. Bei der Verwendung der erfindungsgemässen Leichtbaurückenplatte im PKW-Bereich kann im Vergleich zu einer herkömmlichen Rückenplatte aus Stahl eine Gewichtsersparnis von über 20 % erreicht werden.

Für die Reduktion des Gewichtes der Rückenplatte weist die Leichtbaurückenplatte in einem Ausführungsbeispiel weiterhin eine gewichtsoptimierte dreidimensionale Formgebung auf. In einem Ausführungsbeispiel weist die gewichtsoptimierte Formgebung weiterhin Festigkeitselemente auf, beispielsweise rippenartige Erhöhungen auf einer Kolbenseite der Leichtbaurückenplatte, die zu einer Erhöhung der Festigkeit der Leichtbaurückenplatte führen.

Eine hohe Festigkeit der Leichtbaurückenplatte ist nötig, da bei einer Beanspruchung der Bremse hohe Druck-, Zug- und Biegekräfte in verschiedenen Achsen auf den Bremskörper und somit auch auf die Leichtbaurückenplatte wirken. Um einerseits eine Gewichtsersparnis und andererseits die geforderte Festigkeit der Leichtblaurückenplatte zu erreichen, weist das hochfeste und gewichtsoptimierte Material, insbesondere der Leichtbau-Grauguss, in einem bevorzugten Ausführungsbeispiel individuell abgestimmte Legierungskomponenten auf. Diese sollen eine ausreichend Festigkeit gebende Basis bilden und dabei Raum lassen für Strukturen und Formen, die den gewichtsoptimierten Grauguss auszeichnet. Dadurch können erweiterte Formgebungsmöglichkeiten eröffnet werden, die weitergehende Gewichtsreduzierungsmöglichkeiten bieten. Die individuell abgestimmten Legierungskomponenten können bspw. eine lamellare Struktur im Guss sowie kugelförmige Anordnungen und Kettenreaktion im Materialverbund aufweisen.

In einem weiteren Ausführungsbeispiel weist die Leichtbaurückenplatte auf einer Reibbelagsträgerseite Haltebolzen auf. Durch die Haltebolzen können beim Bremsvorgang entstehende Scherkräfte besser von dem Reibbelag auf die Leichtbaurückenplatte übertragen werden. Dadurch kann beispielsweise die Verbindung zwischen dem Reibelement und der Leichtbaurückenplatte, die vorzugsweise gepresst und/oder geklebt ist, entlastet werden.

In einem weiteren Ausführungsbeispiel weist das hochfeste und gewichtsoptimierte Material zudem geräuschdämpfende Eigenschaften auf. Dadurch kann der Aufwand für die im Stand der Technik gebräuchlichen Anti-Noise-Massnahmen reduziert werden oder wird im Idealfall sogar unnötig. Dadurch kann weiteres Gewicht eingespart werden, da insbesondere durch die Nutzung der speziellen Gussmaterialien geräuschdämpfende Eigenschaften in den Bremskörper der Bremsanlage eingebracht werden können. Im Gegensatz dazu zeigen schall- und schwingungstechnische Eigenschaften der gewalzten Stelle aus dem Stand der Technik nur geringe Dämpfungseigenschaften. Gegebenenfalls kann der Bremskörper Dämpfungselemente zur zusätzlichen Geräuschdämpfung aufweisen. Die Dämpfungselemente können beispielsweise als Dämpfungsfolie oder Dämpfungslack zwischen den Reibbelag und die Leichtbaurückenplatte eingebracht werden. Weitere für den Fachmann naheliegende Dämpfungselemente sind durch die Erfindung umfasst.

In einem weiteren erfindungsgemässen Ausführungsbeispiel handelt es sich bei dem Bremskörper um einen Leichtbau-Verbundbremskörper für den Einbau in Scheibenbremsen an Fahrzeugen oder Industriebremsen, insbesondere für den Einbau in bestehende Bremsen im PKW-Bereich. Der Leichtbau-Verbundbremskörper besteht in einem typischen Ausführungsbeispiel aus einer Leichtbaurückenplatte und einem Belagssystem. Das Belagssystem weist ein Reibbelag und eine Reibbelagsrückenplatte auf. In einem typischen Ausführungsbeispiel wird der Reibbelag auf die Reibbelagsrückenplatte aufgepresst und/oder aufgeklebt. Das Belagssystem ist in die Leichtbaurückenplatte des Leichtbau-Verbundsbremskörpers eingelegt und kraft- und/oder formschlüssig mit der Leichtbaurückenplatte verbunden. Die Verbindung zwischen dem Belagssystem und der Leichtbaurückenplatte ist reversibel ausgestaltet und die Leichtbaurückenplatte dadurch wieder verwendbar.

Die Leichtbaurückenplatte besteht aus einem hochfesten und leichten Material. Bei dem hochfesten und leichten Material handelt es sich vorzugsweise um Titan oder eine Titanlegierung. Weiterhin kann es sich um einen Grauguss oder eine hochfeste Leichtmetalllegierung oder einen hochfesten Kunststoff handeln. Bei der Auswahl des hochfesten und leichten Materials ist insbesondere zu berücksichtigen, dass es eine ausreichende Festigkeit sowie eine ausreichende Temperaturfestigkeit für den Einsatz in einer Bremsanlage aufweist.

In einem Ausführungsbeispiel weist die Leichtbaurückenplatte eine Tasche auf, die mit den Konturen des Belagssystems korrespondiert und zur Aufnahme des Belagssystems geeignet ist. Die reversible Verbindung zwischen dem Belagssystem und der Leichtbaurückenplatte erfolgt vorzugsweise durch Befestigungsmitteln in Form von Schrauben und/oder Nieten. Weiterhin kann es sich bei den Befestigungselementen um Clipse oder dergleichen handeln.

Bei einem Bremskörper für den PKW-Bereich aus dem Stand der Technik wird der Bremsbelag meist auf eine Stahlrückenplatte der Stärke von etwa 4,5 bis 6 mm aufgebracht. In einem typischen Ausführungsbeispiel wird der Reibbelag des Belagssystem des Leichtbau-Verbundbremskörpers auf eine 2 mm dicke Reibbelagsrückenplatte aus Stahl aufgebracht, die anschliessend in die Leichtbaurückenplatte eingelegt und befestigt wird. Die Gesamtstärke des Leichtbau-Verbundbremskörpers, bestehend aus der Leichtbaurückenplatte, der Reibbelagsrückenplatte und dem Reibbelag, entspricht in etwa der Stärke eines herkömmlichen Bremskörpers. Durch die Verwendung beispielsweise von Titan für die Leichtbaurückenplatte sinkt das Rückenplattengewicht in einem Ausführungsbeispiel um ca. 20 %. Die Höhe der Gewichtsreduktion ist dabei von der Grösse des Bremskörpers abhängig.

Durch den erfindungsgemässen Leichtbau-Verbundbremskörper kann somit eine Gewichtsreduktion in erheblichem Masse erzielt werden. Je nach Ausführungsart der Bremse (Grösse, Verhältnis Rückenplatte zu Reibbelagskontur, Verwendung des ursprünglichen Rückenplattenmaterials) können Gewichtsersparnisse zwischen 15 und 30 % erreicht werden. Weiterhin ist durch den Einsatz des Leichtbau-Verbundbremskörpers die Möglichkeit des Recyclings von Teilen des Bremskörpers gegeben. Zudem kann die Leichtbaurückenplatte wieder verwendet werden, wodurch eine Altteilversorgung verhindert wird und Ressourcen geschont werden.

Weitere für den Fachmann naheliegende Ausführungsformen, beispielsweise das Einbringen eines Reibbelagverschleisssensors, sind durch die vorliegende Erfindung mitumfasst.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine schematische Darstellung des Aufbau eines erfindungsgemässen Bremskörpers;
- Figur 2: eine perspektivische Darstellung einer erfindungsgemässen Leichtbaurückenplatte;
- Figur 3: eine Draufsicht von oben auf die Leichtbaurückenplatte nach Figur 2;
- Figur 4: eine Ansicht einer Reibbelagsträgerseite der Leichtbaurückenplatte nach Figur 2; und
- Figur 5: eine schematische Darstellung eines erfindungsgemässen Leichtbau-Verbundbremskörpers.

### Ausführungsbeispiel

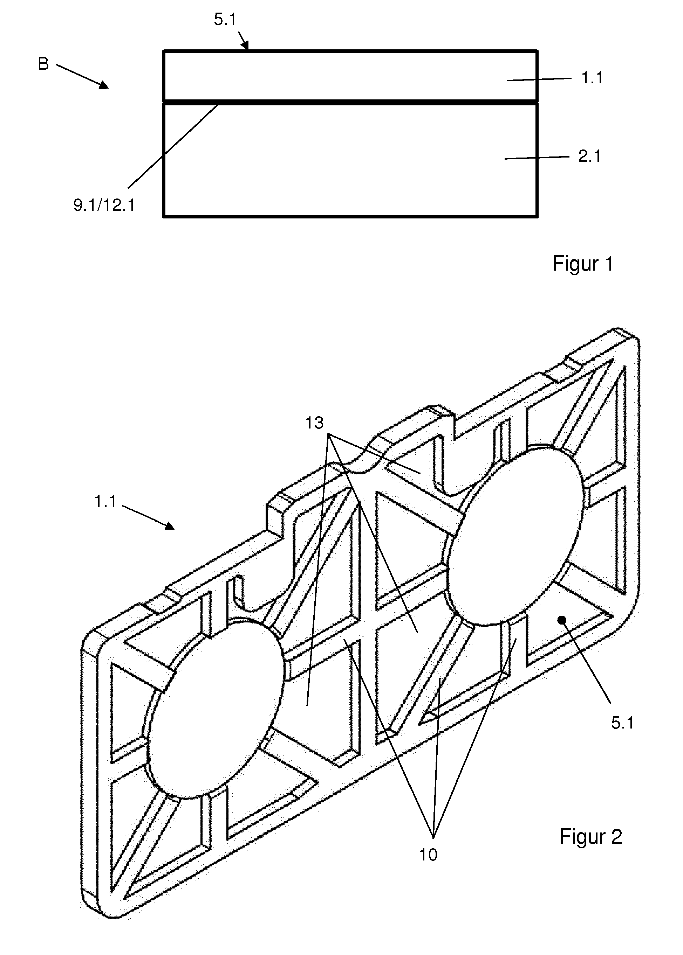

In Figur 1 ist ein erfindungsgemässer Bremskörper B mit einer Leichtbaurückenplatte 1.1 und einem Reibbelag 2.1 dargestellt. Der Bremskörper B mit der Leichtbaurückenplatte 1.1 ist insbesondere für einen Einbau in Scheibenbremsen an Fahrzeugen oder Industriebremsen geeignet.

Die Leichtbaurückenplatte 1.1 ist ein Trägerelement für den Reibbelag 2.1. Der Reibbelag 2.1 wird in einem typischen Ausführungsbeispiel auf einer Reibbelagsträgerseite 4.1 an der Leichtbaurückenplatte 1.1 angebracht. Die Anbringung des Reibbelags 2.1 an der Leichtbaurückenplatte 1.1 erfolgt in Ausführungsbeispielen durch Aufpressen des Reibbelags 2.1 auf die Leichtbaurückenplatte 1.1 und/oder durch Verkleben des Reibbelags 2.1 mit der Leichtbaurückenplatte 1.1. Bei einem Verkleben des Reibbelags 2.1 auf der Leichtbaurückenplatte 1.1 wird vor dem Zusammenfügen zwischen die Leichtbaurückenplatte 1.1 und dem Reibbelag 2.1 eine Klebeschicht 9.1 aufgebracht.

In einem erfindungsgemässen Ausführungsbeispiel besteht die Leichtbaurückenplatte 1.1 aus einem hochfesten und gewichtsoptimierten Material. Bei dem hochfesten und gewichtsoptimierten Material kann es sich um Titan, eine Titanlegierung, einen Hochtemperaturkunststoff oder eine Leichtmetalllegierung, bspw. eine Aluminiumlegierung handeln.

Vorzugsweise handelt es sich bei dem hochfesten und gewichtsoptimierten Material um ein Gussmaterial, insbesondere einen Leichtbau-Grauguss und/oder eine Graugusslegierung.

Die hohe Festigkeit und die Gewichtsoptimierung der Leichtbaurückenplatten 1.1 wird dadurch erreicht, dass das hochfeste und gewichtsoptimierte Material, insbesondere der spezielle Grauguss/Leichtbau-Grauguss individuell abgestimmte Legierungskomponenten auf. Hierdurch wird, wie in der Figur 2 dargestellt, eine gewichtsoptimierte, dreidimensionale Formgebung der Leichtbaurückenplatte 1.1 ermöglicht, die eine weitergehende Gewichtsreduzierung ermöglicht. Die gewichtsoptimierte dreidimensionale Formgebung der Leichtbaurückenplatte 1.1 weist in einem Ausführungsbeispiel zur Erreichung einer höheren Festigkeit Festigkeitselemente 10 auf, die beispielsweise wie in der Figur 2 dargestellt als Rippen ausgebildet sind. Zwischen den Rippen befinden sich Ausnehmungen 13, in denen eine geringere Materialstärke als bei den Rippen vorhanden ist, wodurch das Gewicht der Leichtbaurückenplatte gesenkt werden kann.

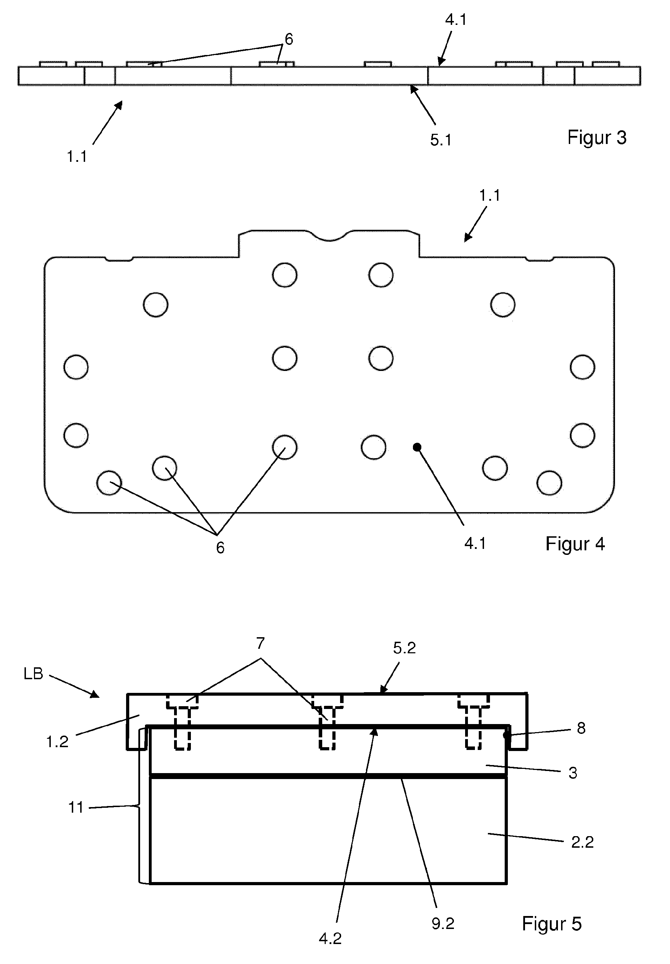

In einem Ausführungsbeispiel umfasst die Leichtbaurückenplatte 1.1 auf der Reibbelagsträgerseite 4.1 zumindest einen Haltebolzen 6 (siehe Figur 3 und 4). Durch die Haltebolzen 6 entsteht zwischen der Leichtbaurückenplatte 1.1 und dem Reibbelag 2.1 eine form- und stoffschlüssige Verbindung. Weiterhin können beim Bremsvorgang entstehende Scherkräfte, Querkräfte und Momente besser vom Reibbelag 2.1 auf die Leichtbaurückenplatte 1.1 übertragen werden.

In einem Ausführungsbeispiel weist das hochfeste und gewichtsoptimierte Material zudem geräuschdämpfende Eigenschaften auf. Dadurch kann der Aufwand für geräuschdämpfende Massnahmen im Bremskörper reduziert werden oder im Idealfall sogar unnötig werden. Die geräuschdämpfenden Eigenschaften der Leichtbaurückenplatte 1.1 können weiterhin durch eine optimierte Formgebung, beispielsweise der Festigkeitselemente 10, verbessert werden. Weiterhin kann gegebenenfalls zwischen die Leichtbaurückenplatte 1.1 und dem Reibbelag 2.1 eine Dämpfungsschicht 12 eingebracht werden, um die Dämpfungseigenschaften des Bremskörpers B zu verbessern.

In Figur 5 ist ein erfindungsgemässer Leichtbau-Verbundbremskörper LB dargestellt, der insbesondere für einen Einbau in Scheibenbremsen an Fahrzeugen oder Industriebremsen geeignet ist. Zur Gewichtsreduktion der Rückenplatten des Bremskörpers wird für den Leichtbau-Verbundbremskörper LB auf einfache konstruktive Weise eine Verbundrückenplatte hergestellt.

Der Leichtbau-Verbundbremskörper LB besteht aus einer Leichtbaurückenplatte 1.2 und einem Belagsystem 11. Das Belagsystem 11 weist einen Reibbelag 2.2 und eine Reibbelagsrückenplatte 3 auf. Bei der Reibbelagsrückenplatte 3 handelt es sich in einem typischen Ausführungsbeispiel um eine dünne Stahlrückenplatte auf die der Reibbelag 2.2 aufgepresst und/oder aufgeklebt wird. In einem Ausführungsbeispiel, in dem der Reibbelag auf die Leichtbaurückenplatte 1.2 aufgeklebt ist, befindet sich weiterhin zwischen dem Reibbelag 2.2 und der Reibbelagsrückenplatte 3 eine Klebeschicht 9.2.

Das Belagsystem 11 wird in dem dargestellten Ausführungsbeispiel in eine Tasche 8, bei der es sich um eine vorgefertigte und konturgerecht ausgearbeitete Vertiefung in der Leichtbaurückenplatte 1.2 handelt, eingelegt. Die Tasche 8 korrespondiert in einem Ausführungsbeispiel mit Konturen des Belagsystems 11 und insbesondere mit Konturen der Reibbelagsrückenplatte 3 so, dass das Belagssystem sich in einem Material der Leichtbaurückenplatte 1.2 abstützen kann.

Das Belagsystem 11 wird mit der Leichtbaurückenplatte 1.2 kraft- und oder formschlüssig verbunden. Die Verbindung zwischen dem Belagsystem 11 und der Leichtbaurückenplatte 1.2 ist in einem typischen Ausführungsbeispiel reversibel. Dadurch kann die Leichtbaurückenplatte 1.2 wieder verwendet werden, wodurch Ressourcen gespart werden können.

Die Leichtbaurückenplatte 1.2 wird in einem typischen Ausführungsbeispiel über Befestigungsmittel 7 mit dem Belagsystem 11 verbunden. Bei dem Befestigungsmittel 7 handelt es sich vorzugsweise um Schrauben und/oder Nieten und/oder Clipse.

Die Leichtbaurückenplatte 1.2 besteht in einem erfindungsgemässen Leichtbau-Verbundbremskörper LB aus einem hochfesten und leichten Material. Bei dem Hochfesten und leichten Material handelt es sich vorzugsweise um Titan oder eine Titanlegierung. Weiterhin kann es sich um einen Grauguss, eine Graugusslegierung, eine hochfeste Leichtmetalllegierung oder einen hochfesten Kunststoff handeln.

Bei der Auswahl des hochfesten Materials für die Leichtbaurückenplatte 1.1 und 1.2 des Bremskörper B und/oder des Leichtbau-Verbundbremskörper LB sollte neben der hohen Festigkeit auch auf eine ausreichende Temperaturfestigkeit geachtet werden, da insbesondere bei Bremsvorgängen hohe Temperaturen in einer Bremsanlage erreicht werden können.

**Bezugszeichenliste**

| | | | |
|---|---|---|---|
| 1 | Leichtbaurückenplatte | B | Bremskörper |
| 2 | Reibbelag | LB | Leichtbau-Verbundbremskörper |
| 3 | Reibbelagsrückenplatte | | |
| 4 | Reibbelagsträgerseite | | |
| 5 | Kolbenseite | | |
| 6 | Haltebolzen | | |
| 7 | Befestigungsmittel | | |
| 8 | Tasche | | |
| 9 | Klebeschicht | | |
| 10 | Festigkeitselement | | |
| 11 | Belagsystem | | |
| 12 | Dämpfungsschicht | | |
| 13 | Ausnehmung | | |
| 14 | | | |
| 15 | | | |
| 16 | | | |
| 17 | | | |
| 18 | | | |
| 19 | | | |
| 20 | | | |
| 21 | | | |
| 22 | | | |
| 23 | | | |
| 24 | | | |
| 25 | | | |
| 26 | | | |
| 27 | | | |
| 28 | | | |
| 29 | | | |
| 30 | | | |
| 31 | | | |
| 32 | | | |
| 33 | | | |

## Patentansprüche

1. Bremskörper mit einer Leichtbaurückenplatte (1.1), insbesondere für einen Einbau in Scheibenbremsen an Fahrzeugen oder Industriebremsen, wobei die Leichtbaurückenplatte (1.1) ein Trägerelement für einen Reibbelag (2.1) ist und der Reibbelag (2.1) auf einer Reibbelagsträgerseite (4.1) an der Leichtbaurückenplatte (1.1) angebracht ist,
**dadurch gekennzeichnet, dass**
die Leichtbaurückenplatte (1.1) aus einem hochfesten und gewichtsoptimierten Material besteht.

2. Bremskörper nach Anspruch 1, **dadurch gekennzeichnet, dass** das hochfeste und gewichtsoptimierte Material ein Gussmaterial, insbesondere ein Grauguss, oder Titan oder ein Hochtemperatur-Kunststoff oder eine Aluminiumlegierung ist.

3. Bremskörper nach einem der vorherigen Ansprüche, **dadurch gekennzeichnet, dass** das hochfeste und gewichtsoptimierte Material individuell abgestimmte Legierungskomponenten aufweist.

4. Bremskörper nach einem der vorherigen Ansprüche, **gekennzeichnet durch** eine gewichtsoptimierte Formgebung der Leichtbaurückenplatte (1.1).

5. Bremskörper nach einem der vorherigen Ansprüche, **gekennzeichnet durch** zumindest einen Haltebolzen (6) auf der Reibbelagsträgerseite (4.1) der Leichtbaurückenplatte (1.1).

6. Bremskörper nach einem der vorherigen Ansprüche, **dadurch gekennzeichnet, dass** das Reibelement (2.1) auf die Leichtbaurückenplatte (1.1) gepresst und/oder aufgeklebt ist.

7. Bremskörper nach einem der vorherigen Ansprüche, **dadurch gekennzeichnet, dass** hochfeste und gewichtsoptimierte Material geräuschdämpfende Eigenschaften aufweist.

8. Leichtbau-Verbundbremskörper, insbesondere für einen Einbau in Scheibenbremsen an Fahrzeugen oder Industriebremsen, aus einer Leichtbaurückenplatte (1.2) und einem Belagsystem (11), wobei das Belagsystem (11) einen Reibbelag (2.2) und eine Reibbelagsrückenplatte (3) aufweist, und das Belagsystem (11) in die Leichtbaurückenplatte (1.2) eingelegt und kraft- und/oder formschlüssig mit der Leichtbaurückenplatte (1.2) verbunden ist, und die Verbindung zwischen dem Belagsystem (11) und der Leichtbaurückenplatte (1.2) reversibel ist, und die Leichtbaurückenplatte (1.2) wiederverwendbar ist,
**dadurch gekennzeichnet, dass**
die Leichtbaurückenplatte (1.2) aus einem hochfesten, leichten Material besteht.

9. Leichtbau-Verbundbremskörper nach dem Anspruch 8, **dadurch gekennzeichnet, dass** das hochfeste, leichte Material Titan oder eine Titanlegierung oder ein Grauguss oder eine hochfeste Leichtmetalllegierung oder ein hochfester Kunststoff ist.

10. Leichtbau-Verbundbremskörper nach dem Anspruch 8 oder 9, **dadurch gekennzeichnet, dass** die Leichtbaurückenplatte (1.2) eine Tasche (8) aufweist, die mit den Konturen des Belagsystems (11) korrespondiert.
